# FASCICULE DE BREVET EUROPEEN

(11) **EP 1 517 789 B1**
(45) Date de publication et mention de la délivrance du brevet: **14.09.2011**
(21) Numéro de dépôt: 03759997.4
(22) Date de dépôt: 03.06.2003
(51) Int. Cl.: B32B 27/20, B60K 15/03, F16L 11/04

(54) **STRUCTURE MULTICOUCHE A PERMEABILITE CONTROLEE**
MEHRLAGIGE KONSTRUKTION MIT GESTEUERTER PERMEABILITÄT
MULTILAYER STRUCTURE WITH CONTROLLED PERMEABILITY

(30) Priorité: 13.06.2002 FR 0207247
(43) Date de publication de la demande: 30.03.2005
(73) Titulaire: Institut Français du Pétrole, 92852 Rueil-Malmaison Cedex (FR)
(72) Inventeur: FLACONNECHE, Bruno, F-95830 Cormeilles-en-Vexin (FR); VINCIGUERRA, Emmanuel, F-92000 Nanterre (FR); KLOPFFER, Marie-Hélène, 78180 Montigny Le Bretonneux (FR); GONZALEZ, Serge, F-69150 Décines (FR)
(86) Numéro de dépôt international: PCT/FR2003/001670
(87) Numéro de publication internationale: WO 2003/106170

(56) Documents cités:
- EP-A- 0 995 591
- EP-A- 1 108 598
- EP-A1- 0 634 597
- WO-A-90/14222
- WO-A1-03/076186
- FR-A1- 2 757 444
- GB-A- 1 582 296
- US-B1- 6 250 081
- BRULÉ B ET AL: "Hig barrier polyamide/polyolefin/organoclay nanocomposites", MACROMOLECULAR SYMPOSIA, WILEY VCH VERLAG, WEINHEIM, DE, no. 233, 1 January 2006 (2006-01-01), pages 210-216, XP002503212, ISSN: 1022-1360

## Description

La présente invention concerne une structure multicouche dont une couche au moins est composée d'un mélange de matériau polymère et d'une, ou plusieurs, charge(s) minérale(s) spécifiquement choisie(s) pour améliorer l'étanchéité aux hydrocarbures du matériau polymère en piégeant, par adsorption sur les charges, à l'intérieur de la matière polymère les hydrocarbures qui passent par perméabilité dans le polymère.

L'invention s'applique notamment à toutes les structures de stockage ou de transport d'hydrocarbures, en particulier les réservoirs de carburant, essence ou gazole, et les conduites des véhicules automobiles.

Le stockage, et le transport, des hydrocarbures posent des problèmes liés à la perméabilité des polymères thermoplastiques utilisés pour la fabrication des structures de stockage et de transport. Dans le cas particulier des réservoirs à essence des véhicules automobiles, la quantité de vapeur d'hydrocarbures émise vers l'extérieur à cause de la perméabilité des parois de réservoir, est soumise à des normes, déjà rigoureuses, et qui vont devenir encore plus sévères. Les normes actuelles les plus sévères sont les normes américaines (CARB et EPA) qui préconisent une émission de 0,5 g/25 heures par véhicule, sachant que chaque constructeur attribue alors 25% à 35% de ces 0,5 g à la perméabilité du réservoir à carburant, soit 100 à 200 mg/25 heures. De plus, la nouvelle norme ZEV (Zéro Emission Vehicle) va ramener le niveau d'émission d'hydrocarbures du véhicule à 0,35 g/25 heures avec une contribution pratiquement nulle (c'est à dire environ 45 à 55 mg/25 heures) du système carburant, et surtout une garantie du niveau d'émission extrêmement faible pendant toute la durée de vie du véhicule.

On connaît les documents suivants qui décrivent des réservoirs en polymère:
- US-5928745 qui décrit un réservoir à essence en polymère bicouche dont la deuxième couche contient une phase dispersée de cyclodextrine ou/et de substituants.
- EP-1108598 et EP-1108599 qui décrivent des réservoirs multicouches dont au moins une couche est constituée d'un matériau nanocomposite.

Ainsi, la présente invention concerne une structure multicouche à perméabilité contrôlée aux hydrocarbures comportant au moins une couche interne en polymère et au moins une couche externe comportant un mélange de matériau polymère et de charges. Les charges sont minérales et choisies pour adsorber et piéger une quantité d'hydrocarbures émise à travers ladite couche interne de façon à réduire la perméabilité de la structure.

Les charges minérales adsorbantes sont choisies parmi le groupe suivant: zéolithe, charbon actif, nanotubes de carbone et leurs mélanges.

Le polymère des couches interne et externe peut être choisi parmi: les polyoléfines (PE, PP), les polyamides, les polymères fluorés, les alliages de polymères (PE-PA), les élastomères.

Le matériau polymère de la couche interne comporte des charges réductrices de perméabilité du type micrométriques choisies parmi le talc, des particules métalliques, ou de type nanométriques choisies parmi les argiles.

Une autre couche peut être intercalée entre la couche interne et la couche externe.

Au moins une face peut être traitée, par exemple par fluoration, pour réduire la perméabilité.

La structure peut être mise en oeuvre par extrusion, ou injection, ou soufflage, ou rotomoulage, ou compression.

L'invention peut être appliquée à la fabrication de réservoir pour automobile.

L'invention peut aussi être appliquée à la fabrication de conduite de carburant pour automobile.

La présente invention concerne une structure multicouche comportant en combinaison au moins deux couches: une couche de perméabilité réduite grâce à une fonction de piégeage par adsorption sur des charges spécifiques de tout ou partie des hydrocarbures émis à travers cette monocouche, et une couche dont la fonction directe est d'être de perméabilité réduite.

La présente invention se fonde donc sur la combinaison de deux fonctions pour la diminution de l'émission d'hydrocarbures à travers la structure. La première fonction est l'utilisation de matériau barrière d'étanchéité, par exemple EVOH, PBT dont la perméabilité peut être réduite par l'incorporation de charges. La deuxième fonction, disposée en aval par rapport au sens d'émission des hydrocarbures à travers la structure, est fondée sur le piégeage par adsorption des hydrocarbures sur des charges minérales, par exemple, des zéolithes, des charbons actifs, des nanotubes de carbone. Ces charges connues pour leur capacité d'adsorption, sont déjà utilisées à l'état pur dans des canisters, mais nullement utilisées en combinaison avec une matrice polymère pour obtenir les avantages de la présente invention. Selon l'invention, la quantité de charge à incorporer dans le polymère est calculée à partir de la connaissance de la perméabilité du polymère seul et de la quantité d'hydrocarbures potentiellement émise au cours de la vie du véhicule à travers le polymère à travers la ou les couches barrières situées en amont.

Les matériaux polymères utilisés doivent être compatibles avec les méthodes de mise en oeuvre utilisées pour la fabrication du type de structures envisagées (réservoirs de stockage d'hydrocarbures, ou conduites) et peuvent donc être des polyoléfines (polyéthylène, polypropylène), des polyamides (11, 12, 6, 6-6, 6-10,...), des polymères fluorés (PVDF,..), des polymères thermoplastiques, des élastomères, ou des résines thermodurcissables.

Afin d'améliorer la performance de la composition, et ainsi diminuer la quantité de charge adsorbante à incorporer, on peut ajouter des charges de particules micrométriques ou nanométriques de façon à réduire la perméabilité du polymère, ou encore en ajoutant un traitement de surface de la monocouche selon l'invention (fluoration des polyoléfines par exemple).

L'invention sera mieux comprise et ses avantages apparaîtront plus clairement à la lecture des exemples ci-après décrits et illustrée par les figures annexées parmi lesquelles:
- la figure 1 illustre une des structures de l'art antérieur;
- la figure 2 schématise le principe de l'invention;
- la figure 3 illustre une des variantes de la présente invention.

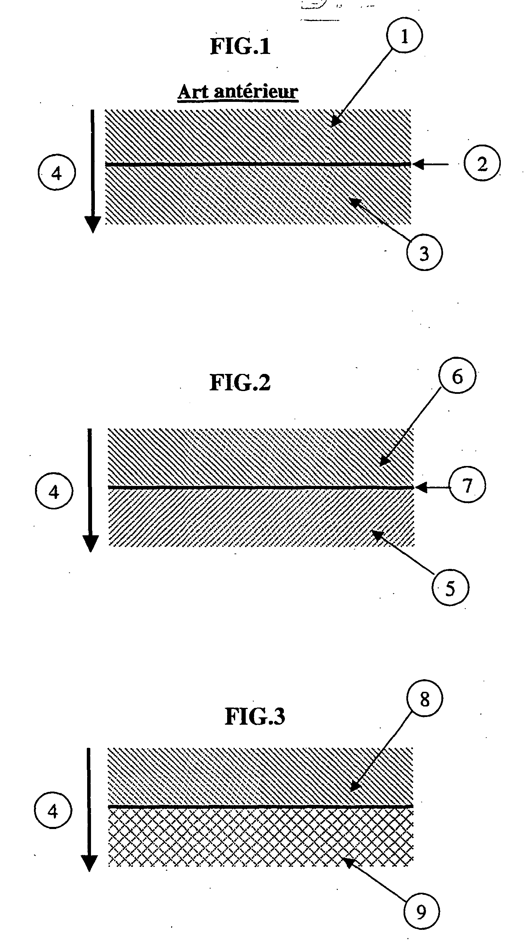

Selon la figure 1, une structure selon l'art antérieur est constituée d'une première couche de polymère 1, par exemple du PEHD, d'une couche en polymère barrière d'étanchéité 2 en EVOH ou PA, puis d'une couche polymère externe 3 en PEHD comprenant plus ou moins de PEHD recyclé. La flèche 4 symbolise le sens d'émission des hydrocarbures, c'est-à-dire que la couche 1 est interne et au contact avec les hydrocarbures et la couche 3 est externe. Ce type de structure permet d'utiliser un polymère très imperméable en couche intermédiaire 2 sous forme d'une feuille très fine ce qui en limite le coût.

La figure 2 illustre le principe de l'invention dans laquelle une couche externe 5 comportant une matrice en polymère dans laquelle des charges minérales sont dispersées. Les charges minérales choisies ont pour fonction d'adsorber les molécules d'hydrocarbures qui peuvent traverser la matrice polymère. La charge n'a pas d'effet important sur la valeur de la perméabilité de la matrice, mais joue le rôle de piège de molécules d'hydrocarbures pour éviter leur traversée complète de la paroi pour se dissiper dans l'atmosphère.

Selon l'invention la couche 5 recouvre au moins une couche 6 interne de faible perméabilité, par exemple du PEHD. Cette couche interne peut être fluorée, ou traitée de façon équivalente pour limiter la perméabilité. Dans la réalisation de la figure 2, une autre couche de polymère très faiblement perméable 7 est intercalée entre la couche interne 6 et la couche externe 5. Cette couche généralement de faible épaisseur est en EVOH, ou PA. La présente structure présente les avantages de combiner:
- une couche interne 6 dont la fonction principale est la tenue mécanique de l'ensemble, tout en ayant une certaine perméabilité;
- une couche externe 5 qui piège par adsorption les hydrocarbures qui sont émis à travers la couche interne.
- pour compléter le contrôle de perméabilité de la couche interne, une couche barrière 7 peut être intercalée, et/ou un traitement de type fluoration peut être fait.

La figure 3 est une variante de l'invention dans laquelle la couche interne 8 est à perméabilité réduite par l'adjonction de particules micro ou nano métriques. En variante, la couche externe 9 est également à base d'une matrice polymère à perméabilité réduite par l'incorporation de particules micro ou nano métriques.

Un réservoir à essence de véhicule automobile en polymère est fabriqué dans la plupart des cas par extrusion-soufflage et la quantité de matière utilisée est d'environ 6 kg dans le cas du polyéthylène.

Dans le cas de structures multicouches, les émissions d'hydrocarbures mesurées par test SHED selon les normes en vigueur peuvent être estimées inférieures à 150 mg/25h et comprises entre 50 et100 mg/25 heures selon le type de carburant utilisé.

Des mesures d'absorption de carburants sur des mélanges polyéthylène + charges adsorbantes selon l'invention, ont permis d'obtenir des taux de captation de la charge de l'ordre de 15% à 25% ce qui correspond donc à une adsorption de 150 mg à 250 mg/g de charge.

L'adjonction de charges micrométriques ou nanométriques dans la couche interne permet d'obtenir une réduction de perméabilité d'un facteur 2 à 10 au maximum.

En considérant des valeurs moyennes d'émissions d'hydrocarbures d'un réservoir (soit environ 50 et 100 mg/25 h) et un facteur de 4 de réduction de perméabilité par des charges micrométriques ou nanométriques, on calcule l'émission de cette structure pour une durée de 10 ans: environ 50 à 100 g en 10 ans.

En prenant en compte un taux de captation d'environ 15% pour des charges adsorbantes incluses dans la couche externe, il faut, pour piéger l'ensemble des vapeurs émises au cours de la vie de 10 ans du véhicule, incorporer de 150 g à 300 g de charges adsorbantes ce qui correspond à des taux massiques de charges inférieurs à 10% pour un tel réservoir constitué avec la structure illustrée par la figure 3.

Ce calcul n'est pas optimisé et si une des données change (type de polymère, diminution de l'émission, amélioration de la captation,...) les taux de charges adsorbantes peuvent être fortement diminués.

Il est donc clair que ces taux massiques ne posent aucun problème industriel dans la fabrication des réservoirs en polymère. Ainsi, l'invention, et ses variantes, présente un avantage certain pour la réduction et le contrôle des émissions d'hydrocarbures d'une structure en contenant.

## Revendications

1. Structure multicouche à perméabilité contrôlée aux hydrocarbures comportant au moins une couche interne (6, 8) en polymère et au moins une couche externe (5, 9) comportant un mélange de matériau polymère et de charges, **caractérisée en ce que** :
- le matériau polymère de la couche interne comporte des charges réductrices de perméabilité du type micrométrique choisies parmi le talc et les particules métalliques, ou de type nanométriques choisies parmi les argiles et ;
- les charges de la couche externe sont des charges minérales adsorbantes choisies parmi le groupe suivant : zéolithe, charbon actif, nanotubes de carbone et leurs mélanges, pour adsorber et piéger une quantité d'hydrocarbures émise à travers ladite couche interne de façon à réduire la perméabilité de ladite structure.

2. Structure selon l'une des revendications précédentes, dans laquelle le polymère des couches interne et externe est choisi parmi : les polyoléfines (PE, PP), les polyamides, les polymères fluorés, les alliages de polymères (PE-PA), les élastomères.

3. Structure selon l'une des revendications précédentes, dans laquelle une autre couche (7) est intercalée entre la couche interne et la couche externe.

4. Structure selon la revendication 1, dans laquelle au moins une face est traitée par fluoration pour réduire la perméabilité.

5. Structure selon l'une des revendications précédentes, mise en oeuvre par extrusion, ou injection, ou soufflage, ou rotomoulage, ou compression.

6. Application de la structure selon l'une des revendications 1 à 5 à la fabrication de réservoir pour automobile.

7. Application de la structure selon l'une des revendications 1 à 5 à la fabrication de conduite de carburant pour automobile.

## Claims

1. A controlled hydrocarbon permeability multilayer structure comprising at least one inner polymer layer (6, 8) and at least one outer layer (5, 9) comprising a mixture of polymer material and of fillers, **characterized in that**:
- the polymer material of the inner layer comprises permeability-reducing fillers of micrometric type selected from among talc and metallic particles, or of nanometric type selected from among clays, and
- the fillers of the outer layer are adsorbent mineral fillers selected from among the following group: zeolite, activated charcoal, carbon nanotubes and mixtures thereof, for adsorbing and trapping an amount of hydrocarbons discharged through said inner layer so as to reduce the permeability of said structure.

2. A structure as claimed in claim 1, wherein the polymer of the inner and outer layers is selected from among: polyolefins (PE, PP), polyamides, fluoropolymers, polymer alloys (PE-PA), elastomers.

3. A structure as claimed in any one of the previous claims, wherein another layer (7) is inserted between the inner layer and the outer layer.

4. A structure as claimed in claim 1, wherein at least one face is treated by fluorination in order to reduce the permeability.

5. A structure as claimed in any one of the previous claims, made by extrusion, injection, blowing, rotational moulding or compression.

6. Application of the structure as claimed in any one of claims 1 to 5 to the manufacture of tanks for motor vehicles.

7. Application of the structure as claimed in any one of claims 1 to 5 to the manufacture of fuel lines for motor vehicles,

## Patentansprüche

1. Mehrschichtige Struktur mit kontrollierter Permeabilität für Kohlenwasserstoffe, die mindestens eine innere Schicht (6, 8) aus Polymer aufweist sowie mindestens eine äußere Schicht (5, 9), welche eine Mischung aus einem Polymerwerkstoff und Füllstoffen aufweist, **dadurch gekennzeichnet, dass**
- der polymere Werkstoff der inneren Schicht Füllstoffe aufweist, welche die verringern und, die vom Mikrometertyp ausgewählt, aus Talkum und Metallpartikeln ausgewählt sind oder, die vom Nanometertyp, ausgewählt aus den Tonen sind und;
- es sich bei den Füllstoffen der äußeren Schicht um adsorbierende mineralische Füllstoffe handelt, die aus der folgenden Gruppe ausgewählt sind: Zeolith, Aktivkohle, Kohlenstoffnanoröhren und deren Mischungen, um eine Menge an Kohlenwasserstoffen, die durch die innere Schicht gelangt, zu adsorbieren und dauerhaft zurückzuhalten, sodass die Permeabilität der Struktur verringert wird.

2. Struktur nach einem der vorhergehenden Ansprüche, wobei das Polymer der inneren und äußeren Schichten ausgewählt ist aus: den Polyolefinen (PE, PP), den Polyamiden, den fluorierten Polymeren, den Polymerlegierungen (PE-PA), den Elastomeren.

3. Struktur nach einem der vorhergehenden Ansprüche, wobei eine weitere Schicht (7) zwischen der inneren Schicht und der äußeren Schicht eingefügt ist.

4. Struktur nach Anspruch 1, wobei mindestens eine Seite eine Fluorierungsbehandlung erfahren hat, um die Permeabilität zu verringern.

5. Struktur nach einem der vorhergehenden Ansprüche, eingesetzt bei Extrusionsverfahren oder Spritzverfahren oder Blasverfahren oder Rotationsformverfahren oder Kompressionsverfahren.

6. Anwendung der Struktur nach einem der Ansprüche 1 bis 5 bei der Herstellung von Tanks für Kraftfahrzeuge.

7. Anwendung der Struktur nach einem der Ansprüche 1 bis 5 bei der Herstellung von Kraftstoffleitungen für Kraftfahrzeuge.
